# EUROPEAN PATENT SPECIFICATION

(11) **EP 0 451 294 B1**
(45) Date of publication and mention of the grant of the patent: **22.03.1995**
(21) Application number: 90916055.8
(22) Date of filing: 01.11.1990
(51) Int. Cl.: B29C 45/50

(54) **CRANK TYPE INJECTION DEVICE**
SPRITZGIESSVORRICHTUNG VOM KURBELTYP
DISPOSITIF D'INJECTION DU TYPE A MANIVELLE

(30) Priority: 02.11.1989 JP 284831/89
(43) Date of publication of application: 16.10.1991
(73) Proprietor: FANUC LTD., Minamitsuru-gun, Yamanashi 401-05 (JP)
(72) Inventor: INABA, Yoshiharu, Kawasaki-shi, Kanagawa 214 (JP); NISHIMURA, Koichi, Sagamihara-shi, Kanagawa 228 (JP)
(74) Representative: Billington, Lawrence Emlyn
(86) International application number: PCT/JP90/01408
(87) International publication number: WO 91/06414

(56) References cited:
- FR-A- 1 369 083
- FR-A- 2 291 848
- GB-A- 410 366
- JP-A- 5 862 030
- JP-B- 3 712 133
- US-A- 3 869 927
- PATENT ABSTRACTS OF JAPAN vol. 10, no. 167 (M-488)(2223) 13 June 1986 & JP-A-61 019 326 ( FANUC K.K. ) 28 January 1986
- PATENT ABSTRACTS OF JAPAN vol. 9, no. 272 (M-425)(1995) 30 October 1985 & JP-A-61 115 419 ( FANUC K.K. ) 21 June 1985

## Description

The present invention relates to a crank type injection apparatus mounted on an injection molding machine.

An injection molding machine comprises an injecting mechanism for filling molten resin into a mold. Conventionally known is a hydraulic injection mechanism comprised of a hydraulic cylinder and an injection plunger. However, the hydraulic injection mechanism has such drawbacks that difficulty is encountered in simplifying its structure, a lot of labor is required to carry out maintenance of the hydraulic cylinder and hydraulic fluid paths, and considerable difficulty occurs in precisely controlling the reciprocation of the injection plunger.

To obviate this, an injection mechanism using a motor as the primary drive has been also developed. A typical motor-driven injection mechanism includes a ball screw/ball nut mechanism which has a ball screw rotatably supported and coupled to the output shaft of a servomotor, and a ball nut threadedly engaged therewith, the ball nut being supported in a manner unrotatable but movable in unison with an injection screw. The rotary motion of the motor output shaft is converted into linear motion of the injection screw through the ball screw/ball nut mechanism, so as to drive the screw toward the direction of injection. However, the motor-driven injection mechanism, which requires the expensive ball screw/ball nut mechanism, has such a drawback that it is high-priced.

Moreover, in the motor-driven injection mechanism, typically, the servomotor is operatively coupled to the ball screw through the medium of a power transmission means which comprises toothed pulleys respectively fixed on the motor output shaft and the ball screw, and a timing belt stretched between these pulleys. In this connection, the reduction ratio between the servomotor and the ball screw can not be increased. For this reason, in order to drive the injection screw with a desired driving force, in particular, with a great driving force, a servomotor which is high in output torque is required. However, since a servomotor having high output torque is not available in the form of a general-purpose servomotor, the motor-driven type injection mechanism becomes high-priced.

Another type of injection mechanism is disclosed in JP-A-37-012133, wherein a crank mechanism is employed to transfer reciprocal driving force from a rotary drive shaft to an injection screw, without any proposal being provided for how the rotary drive shaft may be driven.

The object of the present invention is to provide a crank type injection apparatus which may be low-priced and which is capable of driving an injection screw with a desired driving force, without the need of employing a high-type electric motor.

According to the present invention there is provided a crank type injection apparatus for use in an injection molding machine which has an injection screw disposed to be movable toward and away from a stationary plate, comprising: a driving shaft rotatably supported; and crank means for converting forward and reverse rotation of said driving shaft into reciprocating motion of the injection screw; characterised by: an electric motor having an output shaft thereof and arranged to rotate said output shaft in forward and reverse directions; a reduction gearing interposed between said driving shaft and the output shaft of said electric motor; and control means adapted to control drive of said electric motor in such a manner that said driving shaft is rotated forwardly and reversely within a predetermined rotary angular region corresponding to a predetermined operational region of said crank means, in which angular region upper and lower dead centers of said crank means and vicinities of said upper and lower dead centers are not contained.

As described above, according to the crank type injection apparatus of the present invention, the rotation of the electric motor is converted into the reciprocating motion of the injection screw, and hence an expensive ball screw/ball nut mechanism is not required. This makes it possible to provide a low-priced injection apparatus. Moreover, since the reduction gearing is interposed between the electric motor and the driving shaft which is coupled to the crank means for reciprocating the injection screw, the injection screw can be driven with a desired driving force even if the output torque of the electric motor is small. Thus, a high output type electric motor is not required, and hence the cost of the injection apparatus can be reduced. In addition, since the crank means is operable within the predetermined operational region in which the upper and lower dead centers of the crank means and the vicinities of the dead centers are not contained, the injection speed is not rapidly reduced in initial and final stages of the injection process, and the rate at which the injection pressure changes with rotation of the driving shaft is not suddenly increased. Thus, a desired injection speed can be obtained over the entire operational region of the crank means, and hence the injection process can be smoothly carried out.

### Brief Description of the Drawings

Fig. 1 is a schematic plan view showing, partly broken, a crank type injection apparatus according to a first embodiment of the present invention;
Fig. 2 is a longitudinal sectional view of the injection apparatus of Fig. 1;
Fig. 3 is a schematic view showing structure of a reduction gearing built in the injection apparatus shown in Fig. 1;
Fig. 4 is a graph showing injection speed and injection pressure changing rate as a function of rotary angle of a driving shaft in a crank mechanism;
Fig. 5 is a plan view showing, partly broken, a crank type injection apparatus according to a second embodiment of the present invention; and
Fig. 6 is a longitudinal sectional view of the injection apparatus shown in Fig. 5.

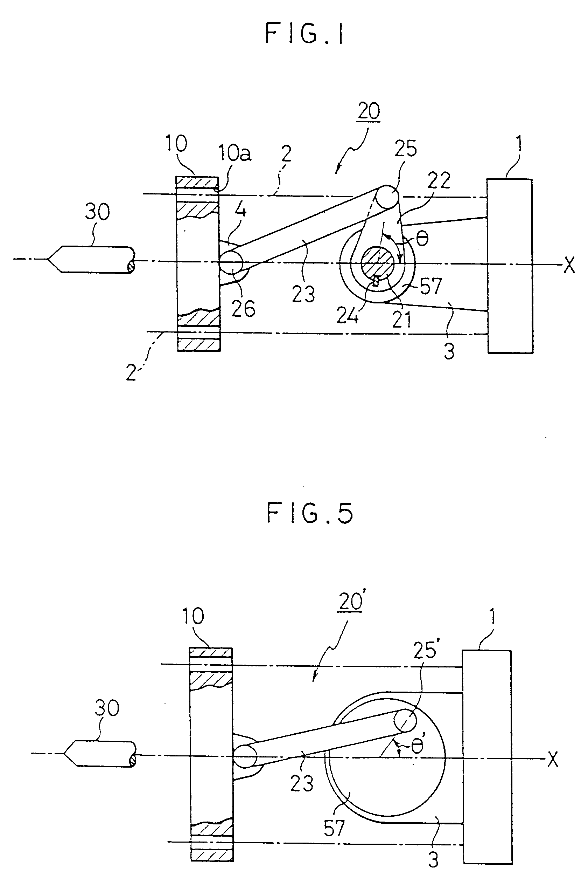

Referring to Fig. 1, an injection molding machine on which a crank type injection apparatus according to a first embodiment of the present invention is mounted comprises a rear plate 1 fixed on an extruder base (not shown), a front plate (not shown), and a plurality of tie bars (shown in a chain line) 2 each having opposite ends thereof respectively coupled to these plates.

The crank type injection apparatus comprises a pusher plate 10 disposed for reciprocal motion along the tie bars 2 between the front plate and the rear plate 1, and a crank mechanism 20 for causing the pusher plate 10 to move toward and away from the rear plate 1. The pusher plate 10 is formed at its peripheral portion with a plurality of guide holes 10a, and the tie bars 2 respectively extend through the guide holes 10a and in parallel with one another. An injection screw 30 is disposed at a front face of the pusher plate 10 to be movable in unison with the pusher plate, and is fitted in an injection cylinder (not shown) having a tip end thereof provided with an injection nozzle (not shown). A first bracket 3 is fixed on the front face of the rear plate 1, a second bracket 4 is fixed on the rear face of the pusher plate 10, these brackets extending along the axis X of the injection screw 30.

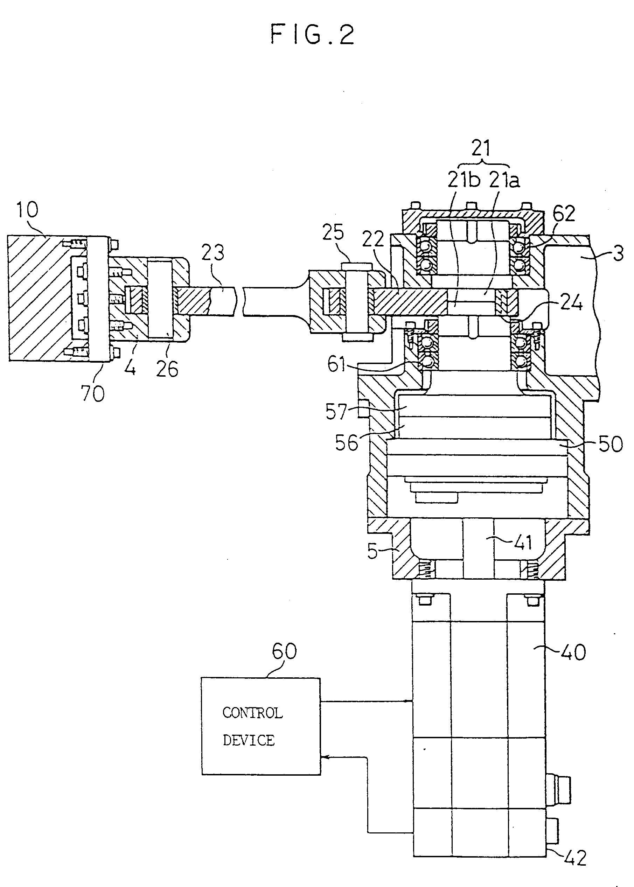

More specifically, the crank mechanism 20 comprises a driving shaft 21 which is rotatably supported by the first bracket 3. As described in detail hereinafter, the driving shaft 21 is comprised of first and second shaft portions 21a and 21b (Fig. 2) which are arranged for integral rotation. A crank arm 22 fixedly fitted in the driving shaft 21 cooperates with a connecting rod 23 to form crank means for converting the rotary motion of the driving shaft 21 into linear motions of the pusher plate 10 and the injection screw 30. The crank arm 22 is fixed on the driving shaft 21 by means of a key 24, and is arranged to rotate in unison with the driving shaft 21. The connecting rod 23 has its one end coupled to the outer end of the crank arm 22 via a crank pin 25, to be swingable relative to the crank arm. Another end of the connecting rod 23 is coupled to the second bracket 4 via a coupling pin for swing motion relative thereto. The driving shaft 21, the crank pin 25 and the coupling pin 26 respectively extend in parallel one another, and in the direction perpendicular to the screw axis X, the driving shaft 21 and the coupling pin 26 being disposed on the screw axis X.

As shown in Fig. 2, the crank type injection apparatus further comprises a servomotor 40 fixed on the first bracket 3 via a mounting member 5, a reduction gearing 50 interposed between the output shaft 41 of the servomotor 40 and the driving shaft 21 of the crank mechanism 20, for amplifying the output torque of the servomotor 40, and control means 60 for controlling the drive of the servomotor 40, the reduction gearing 50 being fixed to the first bracket 3. The servomotor 40 may be comprised of a general purpose servomotor other than a high output type servomotor.

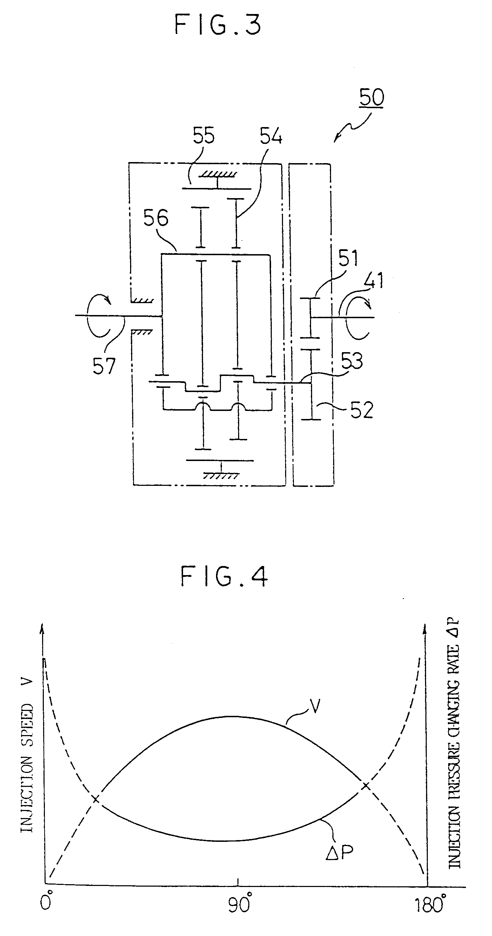

In the present embodiment, the reduction gearing 50 is comprised of a built-in type reduction gearing whose reduction ratio is high, e.g., a RV reduction gearing manufactured by Teijin Seiki Co., Ltd. As shown in Fig. 3, the RV reduction gearing 50 comprises a sun gear 51 disposed for rotation in unison with the motor output shaft 41, and is so designed as to cause each of three planet gears (one of them is denoted by reference numeral 52) meshing with the sun gear 51 to turn around on its own axis, with rotation of the sun gear 51, while moving around the sun gear 51. A crank shaft 53, supported by a casing 56 for rotation in unison with the planet gears 52, supports two eccentric gears 54, and cycloid-shaped external teeth formed in each eccentric gear are in mesh with a stationary ring gear 55 (inside tooth). With rotation and revolution of the crank shaft 53, the eccentric gears 54 rotates around the crank shaft 53 while moving along with the ring gear 55, and further, the casing 56 by which the crank shaft 53 is rotatably supported and an output shaft 57 arranged for rotation in unison with the casing rotate with a large reduction ratio (1:40 in the present embodiment) with respect to the rotation of the motor output shaft 41.

Referring to Fig. 2 again, the output shaft 57 of the reduction gearing 50 is formed integrally with the shaft portion 21b of the driving shaft 21 of the crank mechanism 20, and is rotatably supported by the first bracket 3 through a ball bearing 61. The first shaft portion 21a of the driving shaft 21 is disposed in alignment with the second shaft portion 21b, and is coupled to the second shaft portion for rotation in unison therewith, and is further rotatably supported by the first bracket 3 through a ball bearing 62.

In this embodiment, the control means for controlling the drive of the servomotor 40 is mounted on the injection molding machine, and is comprised of a numerical control device including a processor, a servo circuit (not shown), etc. The servo circuit is connected to the servomotor 40 and a position detector 42 attached thereto. The numerical control device 60 is operable to control starting, stopping, speed of rotation, and direction of rotation of the servomotor 40, and further control the number of rotation (the total rotary angle) of the servomotor 40 in one injection process, in accordance with a control program prepared beforehand. More specifically, the rotation number of the servomotor 40 in one injection process is controlled in such a manner that the driving shaft 21 of the crank mechanism 20 is rotated, from the start of the injection process to the completion thereof, within a predetermined rotary angular region (e.g., the rotary angular region varying from 30° to 150° ) corresponding to a predetermined operational region in which the upper and lower dead centers of the crank mechanism 20 and the vicinities of these dead centers are not contained. Moreover, the number of motor rotation in a metering process is controlled in a similar manner, so that the driving shaft 21 is rotated, e.g., from 150° to 30° . Here, the rotary angle of the driving shaft 21 is represented by that angle ϑ (shown in Fig. 1) which is formed between the axis of the crank pin 25 of the crank mechanism and the screw axis X. The rotary angle of the driving shaft assumes a value of 0° when the crank pin 25 is located on the screw axis X at the side close to the rear plate 1 with respect to the driving shaft 21. At that time, the crank arm 22 and the connecting rod 23 are overlapped with each other, and their axes are aligned with the screw axis X.

In Fig. 2, reference numeral 70 denotes a load cell held between the pusher plate 10 and the second bracket 4, for detecting a reaction force (injection pressure, back pressure) of molten resin acting on the injection screw 30. The numerical control device 60 is so designed as to execute injection pressure and back pressure control in accordance with output of the load cell, where required. However, such control is not carried out in this embodiment.

In the following, the operation of the injection apparatus shown in Figs. 1 and 2 will be explained.

When the processor of the numerical control device 60 starts pulse distribution to the servo circuit after injection start command, direction of rotation and target rotational speed of the servomotor 40, target rotation number of the servomotor 40 over the time period from the start of injection to the completion thereof are read by the processor from the control program, the drive for the forward rotation of the servomotor 40 is started by the servo circuit. The forward rotary force of the servomotor 40 is amplified by the reduction gearing 50, and is then transmitted to the driving shaft 21 of the crank mechanism 20. As a result, the driving shaft 21 is rotated in the forward direction from its initial rotary angular position of 30° with a great driving force and at a predetermined speed. By the forward rotation of the driving shaft 21, the pusher plate 10 and the injection screw 30 arranged integrally therewith are driven in the forward direction with a great driving force, through the key 24, crank arm 22, crank pin 25, connecting rod 23, and coupling pin 26 of the crank mechanism 20 and through the second bracket 4, so that the molten resin within the injection cylinder is injected into a mold.

During the injection process, the pulse distribution from the processor to the servo circuit is periodically executed, while feedback pulses from the position detector 42 are applied to the servo circuit with rotation of the servomotor 40, and a deviation between the current target rotatinal position of the motor and its actual rotational position is stored in an error resistor of the servo circuit. Thereafter, when a final target rotational position is reached or when the rotary angle of the driving shaft 21 reaches 150° , the rotation of the servomotor 40 is stopped, whereby the injection process is completed. Then, the hold process is entered.

As explained above, during the injection process, the driving shaft 21 of the crank mechanism 20 is driven by the servomotor 40 through the reduction gearing 50 so as to rotate forwardly. This makes it possible to drive, through the crank mechanism and the pusher plate 10, the injection screw 30 in the forward direction with a desired driving force against the reaction force generated by the molten resin, even if the servomotor is comprised of a general purpose servomotor. Furthermore, during the injection, the driving shaft 21 is rotated within the rotary angular region varying from 30° to 150° , corresponding to the operational region which does not include the upper and lower dead centers of the crank mechanism 20 and the vicinities of the dead centers. As a result, a rapid decrease (shown by the dotted line in Fig. 4) in the injection speed (speed of forward movement of the pusher plate and the screw) accompanying with a change of the rotary angle of the driving shaft 21, and a rapid change (shown by the dotted line in Fig. 4) in the changing rate of the injection pressured (driving force applied from the crank mechanism to the pusher plate and the injection screw) are removed, these rapid decrease and rapid change being found in other rotary angular regions corresponding to the upper and lower dead centers. After all, in comparison with a case where the driving shaft 21 is rotated in a rotary angular region varying from 0° to 180° , the injection speed V is maintained at a larger value within the rotary angular region of the driving shaft. Further, the changing rate ΔP of injection pressure relatively gradually changes as shown by the solid line in Fig. 4, with a change of the rotary angle of the driving shaft. As a result, the injection process by the crank type injection apparatus is speedy and smoothly accomplished. In the meantime, Fig. 4 shows the injection speed V and the changing rate ΔP of the injection pressure when the driving shaft 21 rotates at a constant speed. If necessary, the number of rotation of the driving shaft can be variably controlled.

When the metering process starting command is read out from the control program after completion of cooling, mold-opening, product-ejecting and mold-closing processes following the hold process, the driving shaft 21 is rotated reversely from the rotary angular position of 150° toward the rotary angular position of 30° by the servomotor 40 under the control of the processor. Thus, the injection screw 30 and the pusher plate 10 are moved back up to their initial positions, and await the next injection process.

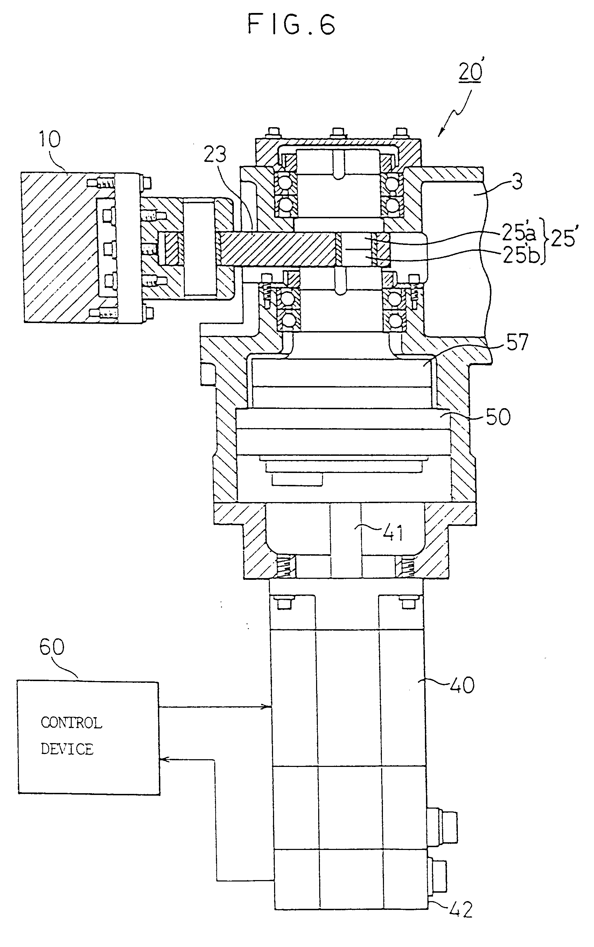

Next, with reference to Fig. 5 and 6, a crank type injection apparatus of the second embodiment of the present invention will be described. Meanwhile, like elements common to the first embodiment are shown by like numerals, and explanations thereof will be omitted.

In the injection apparatus of the second embodiment, the driving shaft 21, the crank arm 22, and the key 24 in the first embodiment are removed, and the connecting rod 23 has one end thereof coupled to the output shaft 57 of the reduction gearing 50 via a crank pin 25'. The crank pin 25', which is comprised of two halves 25'a and 25'b coupled to each other for integral rotation, is disposed to be off-centered with respect to the axis of the output shaft 57, and cooperates with the connecting rod 23 and the line to form a crank mechanism 20'. The output shaft 57 of the reduction gearing 50 functions as a driving shaft for the crank mechanism 20'. If the off-centered distance of the crank pin 25' relative to the output shaft 57 is equal to the length of the crank arm 22 of the first embodiment, the stroke of the pusher plate 10 is the same in both the embodiments. As similar to the first embodiment, the rotary angle of the driving shaft 57 is limited within a region varying from 30° to 150° . The rotary angle of the driving shaft is represented by an angle Θ formed between a straight line, which connects the center of the crank pin 25' with that of the driving shaft 57, and the screw axis X. This rotary angle assumes a value of 0° , when the crank pin 25' is positioned on the screw axis X at the side close to the rear plate 1.

According to the injection apparatus of the second embodiment, since the elements 21, 22 and 24 of the first embodiment are unnecessary, the number of components can be reduced so that the crank mechanism 20' is simplified in construction, and its durability can be improved. Because the stroke of the pusher plate 10 is limited to a value smaller than the diameter of the output shaft 57 of the reduction gearing 50, the injection apparatus is suitable to a small-sized injection molding machine.

The present invention is not limited to the aforementioned first and second embodiments, and various modifications thereof may be made.

For example, although the RV reduction gearing is employed as the reduction gearing 50 in the embodiments, other reduction gearings may be employed. Especially, a cyclonic reduction gearing (manufactured by Sumitomo jukogyo Co., Ltd.) provides a high reduction ratio in the order of 1:200 at a single reduction stage, as in the RV reduction gearing, and can be easily built in the power transmission path between the motor and the crank mechanism. Therefore, this gearing is preferable for use as a built-in type reduction gearing with a high reduction ratio. Further, the rotary angular region of the driving shafts 21 and 57 is not always limited within a region of 30° to 150° , and the rotary angular region may be determined appropriately in dependence on the specification of the injection molding machine concerned. Moreover, although the driving shaft 21 and the crank pin 25' each comprised of two component parts are used respectively in the first and the second embodiments, a driving shaft and a crank pin each comprised of a single part may be also employed.

In the second embodiment, the connecting rod 23 is coupled through the crank pin 25' to the output shaft 57 of the reduction gearing 50, serving as the driving shaft. Alternatively, the connecting rod may be coupled to a disc fixed to the output shaft of the reduction gearing, whereby the stroke of the pusher plate 10 can be increased.

## Claims

1. A crank type injection apparatus for use in an injection molding machine which has an injection screw (30) disposed to be movable toward and away from a stationary plate (1), comprising:
a driving shaft (21, 57) rotatably supported; and
crank means (22, 23) for converting forward and reverse rotation of said driving shaft (21, 57) into reciprocating motion of the injection screw (30);
characterised by:
an electric motor (40) having an output shaft (41) thereof and arranged to rotate said output shaft (41) in forward and reverse directions;
a reduction gearing (50) interposed between said driving shaft (21, 57) and the output shaft (41) of said electric motor (40); and
control means (60) adapted to control drive of said electric motor (40) in such a manner that said driving shaft (21, 57) is rotated forwardly and reversely within a predetermined rotary angular region corresponding to a predetermined operational region of said crank means (22, 23), in which angular region upper and lower dead centers of said crank means (22, 23) and vicinities of said upper and lower dead centers are not contained.

2. A crank type injection apparatus according to claim 1, wherein said injection apparatus is mounted in an injection molding machine which has a rear plate serving as the stationary plate (1), and a pusher plate (10) disposed to be movable toward and away from said rear plate (1) in unison with the injection screw (30), and wherein the crank means (22, 23) is coupled to said pusher plate (10) for converting, through said pusher plate (10), forward and reverse rotation of said driving shaft (21, 57) into reciprocating motion of the injection screw (30).

3. A crank type injection apparatus according to claim 2, wherein said crank means (22, 23) includes a crank arm (22) having one end thereof coupled to said driving shaft (21), a connecting rod (23) having one end rotatably coupled to said pusher plate (10), and a crank pin (25) rotatably coupling another end of said crank arm (22) to another end of said connecting rod (23).

4. A crank type injection apparatus according to claim 2 or 3, wherein said crank means (22, 23) further includes a bracket (4) attached to said pusher plate (10), and a coupling pin (26) rotatably coupling said one end of said connecting rod (23) to said bracket (4).

5. A crank type injection apparatus according to any preceding claim, wherein said reduction gearing (50) has an output shaft (57) disposed in alignment with said driving shaft (21) and coupled to said driving shaft (21), and wherein an input side of said reduction gearing (50) is directly coupled to said output shaft (41) of said electric motor (40).

6. A crank type injection apparatus according to claim 2, or claim 4 when appended to claim 2, wherein said crank means includes a crank pin (25') coupled to said driving shaft (57) in a manner off-centered with respect to an axis of said driving shaft (57), and a connecting rod (23) having its ends rotatably coupled to said crank pin (25') and said pusher plate (10), respectively.

7. A crank type injection apparatus according to claim 6, wherein said reduction gearing (50) has an output shaft serving as said driving shaft (57), and wherein said crank pin (25') is mounted to said output shaft (57) of said reduction gearing (50) in a manner off-centered with respect to an axis of said output shaft of said reduction gearing (50).

8. A crank type injection apparatus according to any preceding claim, and wherein an injection speed characteristic and an injection pressure characteristic, each of which is represented as a function of position of the injection screw (30), are variable.

9. A crank type injection apparatus according to any preceding claim, wherein said predetermined operational region of said crank means (22, 23) is a range from 30° to 150° between the upper and lower dead centers of the crank means (22, 23).

## Patentansprüche

1. Spritzgießvorrichtung vom Kurbeltyp zur Benutzung in einer Spritzgießmaschine, die eine Einspritzförderschnecke (30) hat, welche so angeordnet ist, daß sie zu einer ortsfesten Platte (1) hin und von dieser fort bewegbar ist, mit
einer Antriebswelle (21, 57), die drehbar gelagert ist, und
einer Kurbel (22, 23) zum Umsetzen einer Vorwärts- und einer Rückwärtsdrehung der Antriebswelle (21, 57) in eine Hin- u. Herbewegung der Einspritzförderschnecke (30),
**gekennzeichnet** durch
einen Elektromotor (40), der eine Ausgangswelle (41) hat und so beschaffen ist, daß er die Ausgangswelle (41) in Vorwärts- u. Rückwärtsrichtungen dreht,
ein Untersetzungsgetriebe (50), das zwischen der Antriebswelle (21, 57) und der Ausgangswelle (41) des Elektromotors (40) liegt ist, und
eine Steuereinrichtung (60), die dazu bestimmt ist, den Trieb des Elektromotors (40) in einer Weise zu steuern, daß die Antriebswelle (21, 57) innerhalb eines vorbestimmten Drehwinkelbereichs, der einem vorbestimmten Arbeitsbereich der Kurbel (22, 23) entspricht, vorwärts und rückwärts gedreht wird, in welchem Winkelbereich obere und untere Totpunkte der Kurbel (22, 23) und Umgebungsbereiche der oberen und unteren Totpunkte nicht enthalten sind.

2. Spritzgießvorrichtung vom Kurbeltyp nach Anspruch 1, bei der die Einspritzvorrichtung in einer Spritzgießmaschine montiert ist, die eine Rückseitenplatte, welche als die ortsfeste Platte (1) dient, und eine Druckplatte (10) hat, die so angeordnet ist, daß sie zusammen mit der Einspritzförderschnecke (30) zu der Rückseitenplatte (1) hin und von dieser fort bewegbar ist, und bei der die Kurbel (22, 23) mit der Druckplatte (10) zum Umsetzen der Vorwärts- u. Rückwärtsdrehung der Antriebswelle (21, 57) in eine Hin- u. Herbewegung der Einspritzförderschnecke durch die Druckplatte (10) verbunden ist.

3. Spritzgießvorrichtung vom Kurbeltyp nach Anspruch 2, bei der die Kurbel (22, 23) einen Kurbelarm (22), der mit einem seiner Enden mit der Antriebswelle (21) verbunden ist, eine Verbindungsstange (23), deren eines Ende drehbar mit der Druckplatte (10) verbunden ist, und einen Kurbelzapfen (25) enthält, der ein anderes Ende des Kurbelarms (22) drehbar mit einem anderen Ende der Verbindungsstange (23) verbindet.

4. Spritzgießvorrichtung vom Kurbeltyp nach Anspruch 2 oder 3, bei der die Kurbel (22, 23) ferner eine Halterung (4), die an der Druckplatte (10) angebracht ist, und einen Verbindungszapfen (26) enthält, der drehbar das eine Ende der Verbindungsstange (23) mit der Halterung (4) verbindet.

5. Spritzgießvorrichtung vom Kurbeltyp nach einem der vorhergehenden Ansprüche, bei der das Untersetzungsgetriebe (50) eine Ausgangswelle (57) hat, die in Ausrichtung mit der Antriebswelle (21) angeordnet und mit der Antriebswelle (21) verbunden ist, und bei der eine Eingangsseite des Untersetzungsgetriebes (50) direkt mit der Ausgangswelle (41) des Elektromotors (40) verbunden ist.

6. Spritzgießvorrichtung vom Kurbeltyp nach Anspruch 2 oder Anspruch 4, wenn dieser auf Anspruch 2 rückbezogen ist, bei der die Kurbel einen Kurbelzapfen (25'), der mit der Antriebswelle (57) in einer Weise verbunden ist, daß er in bezug auf eine Achse der Antriebswelle (57) exzentrisch ist, und eine Verbindungsstange (23) enthält, deren Enden drehbar mit dem Kurbelzapfen (25') bzw. der Druckplatte (10) verbunden sind.

7. Spritzgießvorrichtung vom Kurbeltyp nach Anspruch 6, bei der das Untersetzungsgetriebe (50) eine Ausgangswelle hat, die als die Antriebswelle (57) dient, und bei der der Kurbelzapfen (25') an der Ausgangswelle (57) des Untersetzungsgetriebes (50) in einer Weise montiert ist, daß er in bezug auf eine Achse der Ausgangswelle des Untersetzungsgetriebes (50) exzentrisch ist.

8. Spritzgießvorrichtung vom Kurbeltyp nach einem der vorhergehenden Ansprüche, bei der eine Einspritzgeschwindigkeits-Kennlinie und eine Einspritzdruck-Kennlinie, wovon jede als eine Funktion der Position der Einspritzförderschnecke (30) dargestellt ist, variabel sind.

9. Spritzgießvorrichtung vom Kurbeltyp nach einem der vorhergehenden Ansprüche, bei der der vorbestimmte Arbeitsbereich der Kurbel (22, 23) ein Bereich von 30° bis 150° zwischen den oberen und unteren Totpunkten der Kurbel (22, 23) ist.

## Revendications

1. Un dispositif d'injection du type à manivelle utilisable dans une machine de moulage par injection qui présente une vis d'injection (30) prévue pour être mobile en va-et-vient par rapport à une plaque fixe, comprenant :
un arbre d'entraînement (21, 57) porté pour pouvoir tourner ; et
un moyen à manivelle (22, 23) pour convertir la rotation vers l'avant et vers l'arrière dudit arbre d'entraînement (21, 57) en un mouvement alternatif de la vis d'injection (30) ;
caractérisé par :
un moteur électrique (40) présentant un arbre de sortie (41) et prévu pour faire tourner ledit arbre de sortie (41) vers l'avant et vers l'arrière ;
un engrenage de réduction (50) interposé entre ledit arbre d'entraînement (21, 57) et l'arbre de sortie (41) dudit moteur électrique (40) ; et
des moyens de commande (60) prévus pour commander l'entraînement dudit moteur électrique (40) de telle manière que ledit arbre d'entraînement (21, 57) soit entraîné vers l'avant et vers l'arrière à l'intérieur d'une zone angulaire de rotation prédéterminée correspondant à une zone de fonctionnement prédéterminée dudit moyen à manivelle (22, 23), zone angulaire dans laquelle ne sont pas contenus les points morts supérieur et inférieur dudit moyen à manivelle (22, 23) ainsi que les voisinages desdits points morts supérieur et inférieur.

2. Un dispositif d'injection du type à manivelle selon la revendication 1, dans lequel ledit dispositif d'injection est monté dans une machine de moulage par injection qui présente une plaque arrière servant de plaque fixe (1), et une plaque de poussée (10) prévue pour être mobile en va-et-vient par rapport à ladite plaque arrière (1) en même temps que la vis d'injection (30), et dans lequel le moyen à manivelle (22, 23) est couplé à ladite plaque de poussée (10) pour convertir, par l'intermédiaire de ladite plaque de poussée (10), la rotation vers l'avant et vers l'arrière dudit arbre d'entraînement (21, 57) en un mouvement alternatif de la vis d'injection (30).

3. Un dispositif d'injection du type à manivelle selon la revendication 2, dans lequel ledit moyen à manivelle (22, 23) comprend un bras de manivelle (22) présentant une extrémité couplée audit arbre d'entraînement (21), une bielle (23) présentant une première extrémité couplée de manière rotative à ladite plaque de poussée (10), et un axe de manivelle (25) couplant de manière rotative une autre extrémité dudit bras de manivelle (22) à une autre extrémité de ladite bielle (23).

4. Un dispositif d'injection du type à manivelle selon la revendication 2 ou 3, dans lequel ledit moyen à manivelle (22, 23) comprend en outre un support (4) fixé à ladite plaque de poussée (10), et un axe de couplage (26) couplant de manière rotative ladite première extrémité de ladite bielle (23) audit support (4).

5. Un dispositif d'injection du type à manivelle selon une revendication précédente quelconque, dans lequel ledit engrenage de réduction (50) présente un arbre de sortie (57) placé en alignement avec ledit arbre d'entraînement (21) et couplé audit arbre d'entraînement (21), et dans lequel un côté d'entrée dudit engrenage de réduction (50) est directement couplé audit arbre de sortie (41) dudit moteur électrique (40).

6. Un dispositif d'injection du type à manivelle selon la revendication 2, ou la revendication 4 lorsqu'elle dépend de la revendication 2, dans lequel ledit moyen à manivelle comprend un axe de manivelle (25') couplé audit arbre d'entraînement (57) d'une manière décentrée par rapport à un axe dudit arbre d'entraînement (57), et une bielle (23) présentant ses extrémités couplées de manière rotative audit axe de manivelle (25') et à ladite plaque de poussée (10), respectivement.

7. Un dispositif d'injection du type à manivelle selon la revendication 6, dans lequel ledit engrenage de réduction (50) présente un arbre de sortie servant en tant qu'arbre d'entraînement (57), et dans lequel ledit axe de manivelle (25') est monté sur ledit arbre de sortie (57) dudit engrenage de réduction (50) d'une manière décentrée par rapport à un axe dudit arbre de sortie dudit engrenage de réduction (50).

8. Un dispositif d'injection du type à manivelle selon une revendication précédente quelconque, et dans lequel une caractéristique de la vitesse d'injection et une caractéristique de la pression d'injection, chacune étant représentée en fonction de la position de la vis d'injection (30), sont variables.

9. Un dispositif d'injection du type à manivelle selon une revendication précédente quelconque, dans lequel ladite zone de fonctionnement prédéterminée dudit moyen à manivelle (22, 23) est une plage comprise entre 30° et 150° entre les points morts supérieur et inférieur du moyen à manivelle (22, 23).
